# EUROPÄISCHE PATENTSCHRIFT

(11) **EP 2 287 491 B1**
(45) Veröffentlichungstag und Bekanntmachung des Hinweises auf die Patenterteilung: **01.08.2012**
(21) Anmeldenummer: 09168357.3
(22) Anmeldetag: 21.08.2009
(51) Int. Cl.: F16F 9/05, F16F 9/38

(54) **Luftfeder**
Pneumatic spring
Coussin d'air

(43) Veröffentlichungstag der Anmeldung: 23.02.2011
(73) Patentinhaber: Continental Teves AG & Co. OHG, 60488 Frankfurt (DE)
(72) Erfinder: Asmus, Mirko, 38120, Braunschweig (DE)

(56) Entgegenhaltungen:
- EP-A1- 1 837 211
- EP-A2- 0 262 080
- DE-A1- 19 704 434
- DE-A1-102006 027 476
- US-A- 4 722 516
- US-A1- 2004 026 836

## Beschreibung

Die Erfindung betrifft eine Luftfeder mit den Merkmalen des Oberbegriffs des Patentanspruchs 1. Damit betrifft die Erfindung eine Luftfeder mit einem zwischen einem Luftfederdeckel und einem Luftfeder-Abrollkolben luftdicht eingespannten Luftfederbalg aus elastomerem Material, wobei der Luftfederbalg unter Ausbildung einer Rollfalte am Luftfederkolben abrollt, also als Rollfederbalg ausgebildet ist, wobei der Deckel und der Luftfederkolben über Anschlusseinrichtungen mit einerseits der gefederten und andererseits der ungefederten Masse verbunden sind. Als Anschlusseinrichtung für den Luftfederkolben dient bei Luftfedern oder Federbeinen üblicherweise der Zylinder des konzentrisch angeordneten Dämpfers, der an seinem zum Fahrwerk weisenden Zylinderende mit einem an das Fahrwerk anschließbarem Auge versehen ist. Weiterhin weist die Luftfeder eine rotationssymmetrische und eine mindestens teilweise flexible Wand aufweisende Schutzabdeckung auf, welche außerhalb des Rollfaltenbereiches am Außenumfang des Luftfederbalges befestigt ist und die Rollfalte vor Verschmutzungen schützt. Dabei ist die Schutzabdeckung am Luftfederbalg ortsfest fixiert ist, und als eine in radialer Richtung federnd verformbare Hülse ausgebildet, welche mit ihrem der Rollfalte abgewandten Ende an den Anschlusseinrichtungen oder dem Abrollkolben federnd anliegt.

Aus der EP 0 262 080 A2 ist eine derartige Luftfeder bekannt. Die vorbekannte Luftfeder weist einen Luftfeder-Abrollkolben, einen Gehäusedeckel und einen Luftfederbalg auf. Der Luftfederbalg ist am dicht mit dem Gehäusedeckel verbunden und bildet bei Abrollbewegungen einen Wulst.

Luftfedereinrichtungen, auch kurz Luftfedern genannt, die zwischen Fahrwerk und Karosserie eingespannt sind und die einen Luftfederbalg aufweisen, der wiederum zwischen einem Luftfederdeckel und einem Abrollkolben befestigt ist, sind in eine Vielzahl von Ausführungen bekannt. Die Luftfeder steht im Betrieb unter einem inneren Überdruck. Der Luftfederbalg rollt unter Last und bei Federbewegungen unter Bildung einer Rollfalte auf der Außenkontur des konzentrischen Luftfederkolbens/Abrollkolbens ab. Eine derartige Luftfeder wird häufig in Straßen- oder Schienenfahrzeugen eingesetzt, um eine komfortable Federung zu erreichen.

Dabei existieren sowohl Luftfedern, bei denen der Luftfederbalg nur einseitig eine Rollfalte bildet, nämlich in der Regel auf dem Abrollkolben, oder Luftfedern, bei denen der Rollbalg unter Bildung einer beidseitigen (Roll-)Falte zwischen Luftfederdeckel und Abrollkolben eingespannt ist. Luftfedern mit einseitiger Rollfalte sind oft in Pkw zu finden, während die oft größeren und tragfähigeren Luftfedern mit beidseitiger Rollfalte eher in LKW und Schienenfahrzeuge eingebaut werden.

Um bei dünneren Rollbälgen eine genügende Tragfähigkeit des Gesamtsystems zu erreichen, werden die Rollbälge bzw. die Luftfedern oder -dämpfer mit so genannten Außenführungen zu versehen, nämlich mit einer den Rollbalg umgebenden rohrförmigen Hülse als "Stützkorsett" oder Stützkörper. So lässt sich beispielsweise ein dünner Rollbalg mit einer dünnen Leichtmetallhülse als Stützkörper auf hohe Innendrücke und damit hohe Tragfähigkeiten bei gleichzeitig gutem Harshness -Verhalten optimieren. Die Außenführungen sind dabei so ausgebildet und angeordnet, dass der Rollbalg einerseits an der Außenseite des Abrollkolbens und andererseits an der Innenoberfläche der Außenführung abrollen kann.

Insbesondere dann, wenn Luftfedern im Fahrwerksbereich von Fahrzeugen angeordnet sind, werden im Stand der Technik oft Faltenbälge als Schutzabdeckungen eingesetzt, die die Luftfeder teilweise umgeben und mit denen z.B. die gegenüber Verschmutzungen empfindliche Rollfalte geschützt wird. Fremdkörper, wie etwa kleine hochgeschleuderte Steine oder Teerstücke aus dem Straßenbelag, können die Gummihaut der Rollbalgfalte nämlich erheblich schädigen und die Lebensdauer verringern. Faltenbälge sind bekanntermaßen in ihrer Längsachse/Längsrichtung dadurch flexibel, dass sich die zickzack-förmig ausgebildeten Falten aneinanderlegen können.

Zur Montage müssen solcher relativ weichen Faltenbälge üblicherweise über Spannringe an ihren Enden mit den zueinander bewegten Teilen einer Luftfeder verbunden werden, also mit beispielsweise der Außenführung an einem ende und mit dem Dämpferzylinder am anderen Ende. Ein Aufklemmen ist auch möglich, führt aber im Lauf der Zeit - auch aufgrund von Materialermüdung - eher zu einem undefinierten Verschieben des Faltenbalges, wodurch die eigentliche Schutzfunktion verringert werden kann.

Aufgabe der Erfindung war es nun, eine Schutzabdeckung bereitzustellen, mit der ein zuverlässiger Schutz gegen Verschmutzung erreicht werden kann, die einfach auch ohne Spannmittel montiert werden kann und dabei eine sichere Funktion und lange Lebensdauer gewährt.

Gelöst wird diese Aufgabe durch die Merkmale des Hauptanspruchs. Weitere vorteilhafte Ausbildungen sind in den Unteransprüchen offenbart.

Dabei weist die hülsenförmige Schutzabdeckung über ihre Länge unterschiedliche Durchmesser auf. Außerdem weist die hülsenförmige Schutzabdeckung über ihre Länge Einschnürungen unterschiedlicher Durchmesser auf. Die unterschiedlichen Durchmesser und Einschnürungen sind dabei so ausgebildet, dass abhängig von der Einfederung unterschiedliche Bereiche der Schutzabdeckung zur federnden Anlage an Anschlusseinrichtungen oder Abrollkolben gelangen.

Eine vorteilhafte Ausbildung besteht darin, dass der Luftfederbalg mit einer den Luftfederbalg hülsenförmig umfassenden Außenführung versehen ist, wobei die Schutzabdeckung an der Außenführung ortsfest fixiert ist und den zwischen Außenführung und Anschlusseinrichtungen vorhandene ringförmigen Rollspalt überdeckt. Eine Fixierung an einer "sowieso" vorhandenen Außenführung erleichtert die Montage noch um eine weiteres. In einer weiteren vorteilhaften Ausbildung können die Außenführung und die hülsenförmige Schutzabdeckung auch einteilig ausgebildet sein, also als Hülse, die z.B. in ihrem oberen Bereich als "Stützkorsett" für den Rollbalg dient und in ihrem unteren Bereich als eine in radialer Richtung federnd verformbare Hülse ausgebildet ist.

Die hülsenförmige Schutzabdeckung weist über ihre Länge unterschiedliche Durchmesser auf, um besser an die Bauformen der Luftfederteile anpassbar zu sein und damit den radialen Bauraum zu reduzieren. In ebendiesem Sinne weist die hülsenförmige Schutzabdeckung über ihre Länge Einschnürungen unterschiedlicher Durchmesser auf.

Die unterschiedlichen Durchmesser und Einschnürungen sind so ausgebildet, dass abhängig von der Einfederung unterschiedliche Bereiche der Schutzabdeckung zur federnden Anlage an Anschlusseinrichtungen oder Abrollkolben gelangen. So kann zum Beispiel der fahrwerksseitige Endbereich einer Schutzabdeckung bei einer Luftfeder für Fahrzeuge so eingebördelt ausgeführt werden, dass im Normalzustand ohne Federbewegungen oder im Tiefpunkt der Einfederung der Endbereich der Schutzabdeckung am Dämpferzylinder anliegt und bei Ausfederung eine anderer mehr mittig angeordneter Bereich der Schutzabdeckung am Abrollkolben anliegt, während der Endbereich gespreizt wird.

Aufgrund der leichten Montage und Demontage und aufgrund der langen Lebensdauer ist die erfindungsgemäße Luftfeder besonders vorteilhaft für die Anwendung in einem Kraftfahrzeug geeignet.

Anhand eines Ausführungsbeispieles soll die Erfindung näher erläutert werden. Es zeigen:

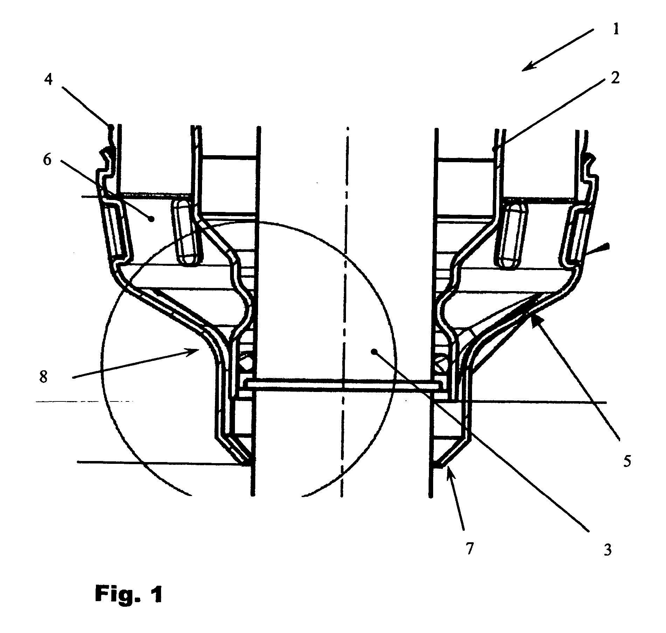

- Fig. 1: den unteren Teil einer erfindungsgemäßen Luftfeder im Normalzustand
- Fig.: den unteren Teil einer erfindungsgemäßen Luftfeder im ausgefederten Zustand

Die Fig. 1 zeigt den unteren Teil einer erfindungsgemäßen Luftfeder 1 mit einem Luftfederkolben/Abrollkolben 2 und dem Dämpferzylinder eines konzentrisch angeordneten Dämpfers als untere Anschlusseinrichtung 3 zur Anbindung z. B. an einen Radträger eines Fahrwerks. Der hier nicht näher dargestellte Luftfederbalg ist von einer hülsenförmigen Außenführung 4 umschlossen.

Die Luftfeder weist eine rotationssymmetrische und radial flexible den Schutzabdeckung 5 auf, welche an der Außenführung 4 ortsfest fixiert ist und den zwischen Außenführung und Anschlusseinrichtungen vorhandene ringförmigen Rollspalt 6 überdeckt und damit die hier nicht näher dargestellte Rollfalte vor Verschmutzungen schützt,

Die Schutzabdeckung 5 ist also hier als eine in radialer Richtung federnd verformbare Hülse ausgebildet ist, welche in dem in der Fig. 1 gezeigten Normalzustand ohne Federbewegungen mit ihrem der Rollfalte abgewandten Ende 7 an der unteren Anschlusseinrichtung 3 federnd anliegt. Die hülsenförmige Schutzabdeckung 5 weist, wie erkennbar, über ihre Länge Einschnürungen unterschiedlicher Durchmesser auf.

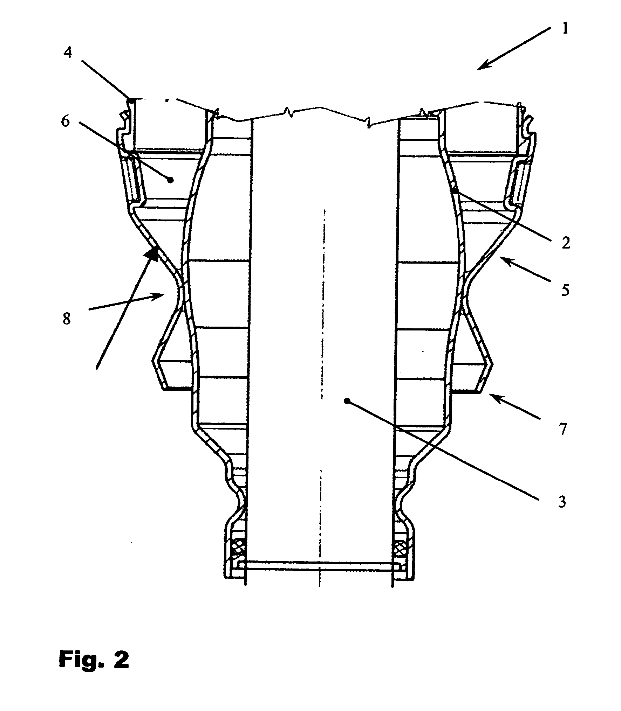

Die Fig. 2 zeigt den unteren Teil einer erfindungsgemäßen Luftfeder 1 im ausgefederten Zustand, in dem die Schutzabdeckung 5 mit ihrer Einschnürung 8 am Abrollkolben 2 anliegt, wobei sich aufgrund Ausbildung als in radialer Richtung federnd verformbare Hülse das der Rollfalte abgewandten Ende 7 der Schutzabdeckung 5 aufspreizt.

### Bezugszeichenliste

### (Teil der Beschreibung)

- 1: Luftfeder
- 2: Abrollkolben
- 3: Anschlusseinrichtung
- 4: Außenführung
- 5: Schutzabdeckung
- 6: Rollspalt
- 7: Ende der Schutzabdeckung
- 8: Einschnürung

## Patentansprüche

1. Luftfeder (1) mit einem zwischen einem Luftfederdeckel und einem Luftfeder-Abrollkolben luftdicht eingespannten Luftfederbalg aus elastomerem Material,
- wobei der Luftfederbalg unter Ausbildung einer Rollfalte am Luftfederkolben (2) abrollt,
- wobei der Deckel und der Luftfederkolben (2) über Anschlusseinrichtungen (3) mit einerseits der gefederten und andererseits der ungefederten Masse verbunden sind,
- mit einer rotationssymmetrischen und eine mindestens teilweise flexible Wand aufweisenden Schutzabdeckung (5), welche außerhalb des Rollfaltenbereiches am Außenumfang des Luftfederbalges befestigt ist und die Rollfalte vor Verschmutzungen schützt,
- wobei die Schutzabdeckung (5) am Luftfederbalg ortsfest fixiert ist,
- und als eine in radialer Richtung federnd verformbare Hülse ausgebildet ist, welche mit ihrem der Rollfalte abgewandten Ende (7) an den Anschlusseinrichtungen (3) oder dem Abrollkolben (2) federnd anliegt,
**dadurch gekennzeichnet,**
- **dass** die hülsenförmige Schutzabdeckung (5) über ihre Länge unterschiedliche Durchmesser aufweist und dass die hülsenförmige Schutzabdeckung (5) über ihre Länge Einschnürungen (8) unterschiedlicher Durchmesser aufweist,
- wobei die unterschiedlichen Durchmesser und Einschnürungen so ausgebildet sind, dass abhängig von der Einfederung unterschiedliche Bereiche (7, 8) der Schutzabdeckung zur federnden Anlage an Anschlusseinrichtungen (3) oder Abrollkolben (2) gelangen.

2. Luftfeder nach Anspruch 1, bei der der Luftfederbalg mit einer den Luftfederbalg hülsenförmig umfassenden Außenführung (4) versehen ist, wobei die Schutzabdeckung (5) an der Außenführung (4) ortsfest fixiert ist und den zwischen Außenführung (4) und Anschlusseinrichtungen (3) vorhandene ringförmigen Rollspalt (6) überdeckt.

3. Luftfeder nach Anspruch 2, bei der die hülsenförmige Schutzabdeckung (5) und die Außenführung (4) einteilig ausgebildet sind.

4. Kraftfahrzeug mit einer Luftfeder nach Anspruch 1 bis 3.

## Claims

1. Pneumatic spring (1) having a pneumatic-spring bellows which is made from elastomeric material and is clamped in an airtight manner between a pneumatic-spring cover and a pneumatic-spring rolling piston,
- the pneumatic-spring bellows rolling on the pneumatic-spring piston (2) with the formation of a rolling fold,
- the cover and the pneumatic-spring piston (2) being connected via connecting devices (3) firstly to the sprung mass and secondly to the unsprung mass,
- having a rotationally symmetrical protective covering (5) which has an at least partially flexible wall, is fastened outside the rolling-fold region to the outer circumference of the pneumatic-spring bellows and protects the rolling fold against contaminants,
- the protective covering (5) being fixed in a stationary manner on the pneumatic-spring bellows
- and being configured as a sleeve which can be deformed resiliently in the radial direction and bearing resiliently with its end (7) which faces away from the rolling fold against the connecting devices (3) or the rolling piston (2),
**characterized**
- **in that** the sleeve-shaped protective covering (5) has different diameters over its length, and in that the sleeve-shaped protective covering (5) has constrictions (8) of different diameters over its length,
- the different diameters and constrictions being configured in such a way that, depending on the compression, different regions (7, 8) of the protective covering pass into resilient contact with connecting devices (3) or the rolling piston (2).

2. Pneumatic spring according to Claim 1, in which the pneumatic-spring bellows is provided with an outer guide (4) which encloses the pneumatic-spring bellows in a sleeve-shaped manner, the protective covering (5) being fixed in a stationary manner on the outer guide (4) and covering the annular rolling gap which is present between the outer guide (4) and connecting devices (3).

3. Pneumatic spring according to Claim 2, in which the sleeve-shaped protective covering (5) and the outer guide (4) are configured in one piece.

4. Motor vehicle having a pneumatic spring according to Claims 1 to 3.

## Revendications

1. Ressort pneumatique (1), comprenant un soufflet de ressort pneumatique en matériau élastomère tendu de manière étanche à l'air entre un chapeau de ressort pneumatique et un piston déroulant de ressort pneumatique,
- le soufflet de ressort pneumatique roulant sur le piston de ressort pneumatique (2) en formant un pli roulant,
- le chapeau et le piston de ressort pneumatique (2) étant connectés, par le biais de dispositifs de raccordement (3), d'une part à la masse à suspension à ressort et d'autre part à la masse sans suspension,
- avec un recouvrement de protection (5) à symétrie de révolution et présentant une paroi au moins partiellement flexible, lequel est fixé à l'extérieur de la région du pli roulant sur la périphérie extérieure du soufflet de ressort pneumatique et protège le pli roulant contre les salissures,
- le recouvrement de protection (5) étant fixé en position sur le soufflet de ressort pneumatique,
- et une douille déformable élastiquement dans la direction radiale étant réalisée, laquelle s'applique élastiquement avec son extrémité (7) opposée au pli roulant contre les dispositifs de raccordement (3) ou contre le piston déroulant (2),
**caractérisé en ce que**
- le recouvrement de protection (5) en forme de douille présente sur sa longueur différents diamètres et **en ce que** le recouvrement de protection (5) en forme de douille présente sur sa longueur des étranglements (8) de différents diamètres,
- les différents diamètres et les étranglements étant réalisés de telle sorte qu'en fonction de la compression du ressort, différentes régions (7, 8) du recouvrement de protection parviennent en appui élastique contre des dispositifs de raccordement (3) ou contre le piston déroulant (2).

2. Ressort pneumatique selon la revendication 1, dans lequel le soufflet de ressort pneumatique est pourvu d'un guide extérieur (4) entourant en forme de douille le soufflet de ressort pneumatique, le recouvrement de protection (5) étant fixé en position sur le guide extérieur (4), et recouvrant la fente roulante (6) annulaire existant entre le guide extérieur (4) et les dispositifs de raccordement (3).

3. Ressort pneumatique selon la revendication 2, dans lequel le recouvrement de protection en forme de douille (5) et le guide extérieur (4) sont réalisés d'une seule pièce.

4. Véhicule automobile comprenant un ressort pneumatique selon les revendications 1 à 3.
